# EUROPÄISCHE PATENTSCHRIFT

(11) **EP 1 577 576 B1**
(45) Veröffentlichungstag und Bekanntmachung des Hinweises auf die Patenterteilung: **06.12.2006**
(21) Anmeldenummer: 05005072.3
(22) Anmeldetag: 08.03.2005
(51) Int. Cl.: F16D 23/02

(54) **Verfahren zur Herstellung eines Zwischenrings eines Mehrfachkonussystems**
Method of manufacturing the intermediate ring of a multiple cone system
Procédé de fabrication d'une bague intermdiaire d'un système à cônes muliples

(30) Priorität: 16.03.2004 DE 102004012864
(43) Veröffentlichungstag der Anmeldung: 21.09.2005
(73) Patentinhaber: Hoerbiger Antriebstechnik GmbH, 86952 Schongau (DE)
(72) Erfinder: Back, Ottmar, 82362 Weilheim (DE); Notz, Robert, 86956 Schongau (DE)
(74) Vertreter: Schmitz, Hans-Werner

(56) Entgegenhaltungen:
- EP-A- 0 821 175
- WO-A-91/03657
- US-A- 5 221 401

## Beschreibung

Die Erfindung betrifft ein Verfahren zur Herstellung eines Zwischenringes eines Mehrfachkonussystems gemäß Anspruch 1.

Synchronisierungen in Schaltgetrieben werden zur Steigerung der Leistungsfähigkeit als Mehrfachkonussynchronisierungen ausgeführt. Der Reibbelag derartiger Synchronisierungen kann dabei für eine Doppelkonussynchronisierung jeweils am Innenkonus des Außenringes und dem Zwischenring oder am Innenkonus des Außenringes und an dem Außenkonus des Innenringes oder am Außen- und Innenkonus zum Zwischenring angeordnet sein.

Die hierbei wirtschaftlichste und damit vorteilhafteste Lösung stellt eine Anordnung des Reibbelages nur am Zwischenring dar.

Ein aus der DE 36 09 879 C2 bekannter Zwischenring ist hierzu mit einem Streusinterreibbelag versehen, der sich durch eine sehr kostengünstige Herstellbarkeit auszeichnet, da die Herstellung umformtechnisch ohne spanende Bearbeitung durchgeführt werden kann. Ein Zwischenring, des ohne spanende Bearbeitung mit einem geklebten Belag hergestellt wird, ist aus EP-A-0 821 175 bekannt.

Zwischenringe mit organischen Belägen, z.B. aus Karbon, müssen auf einen konusförmigen Trägerring aufgeklebt werden. Zur Ausführung der Klebung ist es erforderlich, Druck und Temperatur aufzubringen. Daher erfolgt die Klebung üblicherweise in einem Heißpresswerkzeug.

Die Aufbringung des Reibbelages muss aus technischen Gründen hierbei auf dem bereits konisch ausgebildeten Trägerring erfolgen. Der zu klebende Konusring wird dabei zusammen mit dem zu verklebenden Belag in ein Werkzeug eingelegt und in einer Presse unter Druck und Temperatur verklebt.

Da bei diesem Verfahren besonders hohe Anforderungen an die Maßhaltigkeit der Belagoberflächen gestellt werden, da andernfalls ein anschließender aufwendiger Kalibrierungsprozess erforderlich ist, ergibt sich im Unterschied zu Konusringen mit Streusintereibbelägen bei zu verklebenden Reibbelägen ein erheblich höherer Aufwand und damit erheblich höhere Fertigungskosten.

Es ist daher Aufgabe der vorliegenden Erfindung, ein Verfahren zur Herstellung eines mit einem aufzuklebenden Belag versehenen Konusringes zu schaffen, das kostengünstig ist und dabei gleichzeitig eine qualitativ hochwertige Fertigung ermöglicht.

Die Lösung dieser Aufgabe erfolgt durch die Merkmale des Anspruches 1.

Der besondere Vorteil des erfindungsgemäßen Verfahrens ist darin zu sehen, dass als Klebeform die mit dem Konus- bzw. Zwischenring im Mehrfachkonussystem zu paarenden Bauteile in Form des Außen- und Innenringes verwendet werden. Da der Konusring im mit der Synchronisierung zu versehenden Getriebe als Zwischenring des Mehrfachkonussynchronsystems eingesetzt wird, der zwischen dem äußeren und dem inneren Ring mit den jeweils entsprechenden konischen Gegenflächen angeordnet ist, bilden diese Bauteile die Reibpartner der Synchronisierung. Wird daher erfindungsgemäß der Außensynchronring als äußere Form bzw. Matrize und der Innenring als innere Form bzw. Stempel verwendet, ergibt diese Anordnung ohne das Verwenden eines speziellen Heißpresswerkzeuges die Klebevorrichtung, in der der Zwischenring mit seinen Reibbelägen versehen werden kann.

Dementsprechend wird erfindungsgemäß zwischen die Matrize und den Stempel der Konus- bzw. Zwischenring und der aufzuklebende Belag eingelegt. Durch Verspannen der Matrize und des Stempels liegt an der zu klebenden Konusfläche eine ausreichende Flächenpressung an.

Der durch diese Anordnung gebildete Verbund bestehend aus der Matrize, dem Zwischenring, dem Belag (der entweder mit einem Klebemittel versehen ist oder für dessen Verklebung das Klebemittel zuvor auf den Zwischenring aufgebracht wurde) und den Spannelementen wird erwärmt (üblicherweise bei einer Temperatur zwischen 180 bis 250 °C) und entsprechend der Aushärtezeit des verwendeten Klebers in seinem verspannten Zustand gehalten. Die Aushärtezeit beträgt üblicherweise 1 bis 30 Minuten.

Nach dem Aushärten des Klebers wird der Verbund aus dem zum Erwärmen verwendeten Ofen entnommen, abgekühlt und es wird die Verspannung gelöst.

Anschließend wird der Verbund getrennt, was vorzugsweise durch ein relatives Verdrehen der genannten Bauteile auf einer Einlaufanlage erfolgt.

Hierdurch ergeben sich gegenüber bekannten Verfahren erhebliche Vorteile:

Denn zunächst ist kein spezielles Klebewerkzeug erforderlich.

Ferner ergibt sich eine optimale Passung der Synchronkomponenten.

Ferner ergibt sich ein reduzierter Montageaufwand und sämtliche auf diese Art und Weise herstellbaren Mehrfachkonussysteme sind 100% kontrolliert lieferbar.

Schließlich ergibt sich der Vorteil, dass das Handling der gesamten Anordnung mit kalten Bauteilen erfolgen kann.

Des Weiteren ergibt sich der Vorteil, dass der Reibbelag Formfehler der Gegenreibflächen ausgleicht und der Differenzwinkel der jeweiligen konischen Reibflächen prozesssicher unter 5' beträgt.

Schließlich ergibt das erfindungsgemäße Verfahren den Vorteil, dass der Reibbelag an beliebigen Konusflächen aufgeklebt werden kann.

Die Unteransprüche haben vorteilhafte Weiterbildungen der Erfindung zum Inhalt.

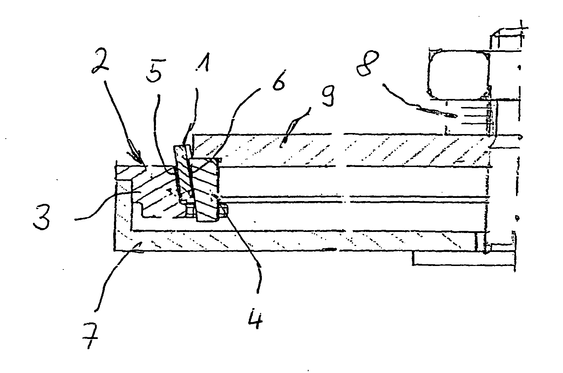

Nachfolgend wird das erfindungsgemäße Verfahren sowie das mit diesem herstellbare Mehrfachkonussystem und der durch das erfindungsgemäße Verfahren herstellbare Zwischenring anhand der Zeichnung näher erläutert.

Die einzige Figur der Zeichnung zeigt einen Zwischenring 1, der im Beispielsfalle mit zwei Reibbelägen 5 und 6 auf seinen Konusflächen versehen ist. Der Zwischenring 1 ist Teil eines Mehrfachkonussystems 2, das im Beispielsfalle einen Außenring 3 und einen Innenring 4 aufweist. Die Figur verdeutlicht hierbei, dass der Zwischenring 1 mit seinen Reibbelägen 5 und 6 zwischen den Außenring 3 und den Innenring 4 eingelegt ist.

Der auf diese Art und Weise hergestellte Verbund, der dem Mehrfachkonussystem 2 entspricht, wird verspannt. Hierzu zeigt die schematisch stark vereinfachte Darstellung der Figur Spannelemente 7, 8 und 9, die zusammen mit den Komponenten 1, 3 und 4 des Mehrfachkonussystems 2 eine Anordnung bilden, die nach dem Verspannen in einem in der Figur nicht näher dargestellten Ofen erwärmt wird, damit der Kleber des bzw. der Beläge 5 und 6 aushärten kann.

Nach dem Abkühlen des Verbundes 2 uns dem Aushärten wird die Verspannung durch Entfernung der Spannelemente 7, 8 und 9 gelöst und die Bauteile in Form des Zwischenringes 1 mit seinen dann auf ihm fixierten Reibbelägen 5 und 6, dem Außenring 3 und dem Innenring 4 können getrennt werden, was üblicherweise durch ein Verdrehen dieser Bauteile auf einer Einlaufanlage erfolgt. Die voranstehende Erläuterung des erfindungsgemäßen Verfahrens zeigt, dass mit diesem ohne die Verwendung eines speziellen Herstellungswerkzeuges sowohl der Zwischenring 1 als auch das später in einem Getriebe zu installierende Mehrfachkonussystem 2 herstellbar sind.

### Bezugszeichenliste

- 1: Zwischenring
- 2: Mehrfachkomponente
- 3: Außenring
- 4: Innenring
- 5, 6: Belag

## Patentansprüche

1. Verfahren zur Herstellung eines Zwischenringes (1) eines Mehrfachkonussystems (2), das einen Außenring (3), den Zwischenring (1) und einen Innenring (4) aufweist, **gekennzeichnet durch** folgende Verfahrensschritte:
- Einlegen des Zwischenringes (1) und eines zu verklebenden Belages (5, 6) zwischen den eine Matrize bildenden Außenring (2) und den einen Stempel bildenden Innenring (4) zur Bildung eines das herzustellende Mehrfachkonussystem (2) bildenden Verbundes;
- Verspannen dieses Verbundes (2);
- Erwärmen des verspannten Verbundes (2) zum Aushärten des Klebers des Belages (5, 6);
- Abkühlen des Verbundes (2) nach dem Aushärten und Lösen der Verspannung; und
- Trennen der Bauteile (1, 3, 4) des Verbundes (2).

2. Verfahren nach Anspruch 1, **dadurch gekennzeichnet, dass** das Verspannen des Verbundes (2) mit einer Flächenpressung von 1 bis 10 N/mm² durchgeführt wird.

3. Verfahren nach Anspruch 1 oder 2, **dadurch gekennzeichnet, dass** zum Verspannen des Verbundes (2) Spannelemente (7, 8, 9) verwendet werden.

4. Verfahren nach einem der Ansprüche 1 bis 3, **dadurch gekennzeichnet, dass** der Verbund (2) in kaltem Zustand montiert wird.

5. Verfahren nach einem der Ansprüche 1 bis 4, **dadurch gekennzeichnet, dass** das Trennen durch relatives Verdrehen der Bauteile (1, 3) des Verbundes (2) auf einer Einlaufschräge erfolgt.

6. Verfahren nach einem der Ansprüche 1 bis 5, **dadurch gekennzeichnet, dass** die Funktionsfähigkeit des Verbundes (2) nach dem Klebeprozess in einer Einlaufschräge überprüft wird.

7. Verfahren nach einem der Ansprüche 1 bis 6, **dadurch gekennzeichnet, dass** der Verbund (2) als Baugruppe in einem Getriebe verbaut wird.

## Claims

1. Method of manufacturing an intermediate ring (1) of a multiple cone system (2), which multiple cone system (2) has an outer ring (3), the intermediate ring (1) and an inner ring (4), **characterised by** the following method steps:
- insertion of the intermediate ring (1), and a coating (5, 6) to be adhesively bonded in place, between the outer ring (2), which forms a die, and the inner ring (4), which forms a ram, to form a multi-piece component which forms the multiple cone system (2) to be manufactured,
- clamping of this multi-piece component (2),
- heating of the clamped multi-piece component (2) to cure the adhesive of the coating (5, 6),
- cooling of the multi-piece component (2) after the curing, and release of the clamping, and
- separation of the component parts (1, 3, 4) of the multi-piece component (2).

2. Method according to claim 1, **characterised in that** the clamping of the multi-piece component (2) is performed at a pressure per unit area in the range 1 N/mm² to 10 N/mm².

3. Method according to claim 1 or 2, **characterised in that** clamping elements (7, 8, 9) are used to clamp the multi-piece component (2).

4. Method according to one of claims 1 to 3, **characterised in that** the multi-piece component (2) is assembled in a cold state.

5. Method according to one of claims 1 to 4, **characterised in that** the separation is effected by turning the component parts (1, 3) of the multi-piece component (2) relative to one another on a running-in taper.

6. Method according to one of claims 1 to 5, **characterised in that** the ability of the multi-piece component (2) to operate after the bonding process is checked on a running-in taper.

7. Method according to one of claims 1 to 6, **characterised in that** the multi-piece component (2) is fitted in a gearbox as a sub-assembly.

## Revendications

1. Procédé de fabrication d'une bague intermédiaire (1) d'un système à cônes multiples (2) comportant une bague extérieure (3), la bague intermédiaire (1) et une bague intérieure (4), **caractérisé par** les étapes suivantes :
- insertion de la bague intermédiaire (1) et d'une garniture (5, 6) à coller entre la bague extérieure (2), qui constitue une matrice, et la bague intérieure (4), qui constitue un poinçon, pour former un composé constituant le système à cônes multiples (2) qu'il convient de fabriquer ;
- serrage de ce composé (2) ;
- chauffage du composé (2) serréé afin de durcir la colle de la garniture (5, 6) ;
- refroidissement du composé (2) après durcissement et détachement du serrage ; et
- séparation des composants (1, 3, 4) du composé (2).

2. Procédé selon la revendication 1, **caractérisé en ce que** le serrage du composé (2) s'effectue avec une pression superficielle comprise entre 1 et 10 N/mm².

3. Procédé selon la revendication 1 ou 2, **caractérisé en ce qu'**on utilise des éléments de serrage (7, 8, 9) pour serrer le composé (2).

4. Procédé selon l'une des revendications 1 à 3, **caractérisé en ce que** le composé (2) est monté à l'état froid.

5. Procédé selon l'une des revendications 1 à 4, **caractérisé en ce que** la séparation s'effectue par rotation relative des composants (1, 3) du composé (2) sur un chanfrein d'entrée.

6. Procédé selon l'une des revendications 1 à 5, **caractérisé en ce que** la capacité de fonctionnement du composé (2) est vérifiée, à l'issue du processus de collage, sur un chanfrein d'entrée.

7. Procédé selon l'une des revendications 1 à 6, **caractérisé en ce que** le composé (2), qui constitue un module, est installé dans un engrenage.
